# EUROPEAN PATENT APPLICATION

(11) **EP 4 391 151 A1**
(43) Date of publication of application: **26.06.2024**
(21) Application number: 23218357.4
(22) Date of filing: 19.12.2023
(51) Int. Cl.: H01M 10/613, H01M 10/643, H01M 10/659, H01M 50/124, H01M 50/152, H01M 50/213

(54) **BATTERY CELL ENCLOSURE**

(30) Priority: 20.12.2022 US 202263434067 P; 15.12.2023 US 202318541629
(71) Applicant: Illinois Tool Works Inc., Glenview IL 60025 (US)
(72) Inventor: SHUKLA, Umang, Glenview, 60025 (US); MANE, Vishwatej, Glenview, 60025 (US); CHETTIER, Vinayak Vishvanath, Glenview, 60025 (US); SCHOENBORN, Randall Joseph, Glenview, 60025 (US); DOBSON, Kenneth S., Glenview, 60025 (US)
(74) Representative: HGF

(57) **Abstract**

A cell enclosure includes an inner enclosure configured to include a battery cell, an outer enclosure, and a pocket between the inner enclosure and the outer enclosure. The pocket includes a phase change material to control a temperature of the battery cell.

## Description

### CROSS-REFERENCE TO RELATED APPLICATIONS

This application claims priority to and the benefit of U.S. provisional patent application no. 63/434,067 filed in the United States Patent and Trademark Office on December 20, 2022, the entire contents of which are incorporated herein by reference as if fully set forth below in their entireties and for all applicable purposes.

### BACKGROUND

Battery cells are used in a variety of applications (e.g., electric and hybrid vehicles, appliances, or any suitable apparatus or means using electrical energy). However, the battery cells are adversely affected by internal and ambient temperature variations. As the demand for battery cells continues to increase, research and development continue to advance battery technologies not only to meet the growing demand for the battery cells, but to operate the battery cells safely and efficiently by controlling the internal and ambient temperature variations.

### SUMMARY

The following presents a simplified summary of one or more aspects of the present disclosure, to provide a basic understanding of such aspects. While some examples may be discussed as including certain aspects or features, all discussed examples may include any of the discussed features. Unless expressly described no one aspect or feature is essential to achieve technical effects or solutions discussed herein.

In one aspect, a cell enclosure includes an inner enclosure configured to include a battery cell, an outer enclosure, and a pocket between the inner enclosure and the outer enclosure. The pocket includes a phase change material, a similar compound, or fluid to control a temperature of the battery cell.

These and other aspects of the camera bracket assemblies and/or electrical circuit components discussed herein will become more fully understood upon a review of the detailed description, which follows. Other aspects and features will become apparent to those of ordinary skill in the art, upon reviewing the following description of specific examples in conjunction with the accompanying figures. While the following description may discuss various advantages and features relative to certain examples, implementations, and figures, all examples can include one or more of the advantageous features discussed herein. In other words, while this description may discuss one or more examples as having certain advantageous features, one or more of such features may also be used in accordance with the other various examples discussed herein. In similar fashion, while this description may discuss certain examples as devices, systems, or methods, it should be understood that such examples of the teachings of the disclosure can be implemented in various tools, devices, systems, and methods.

### DESCRIPTION OF THE DRAWINGS

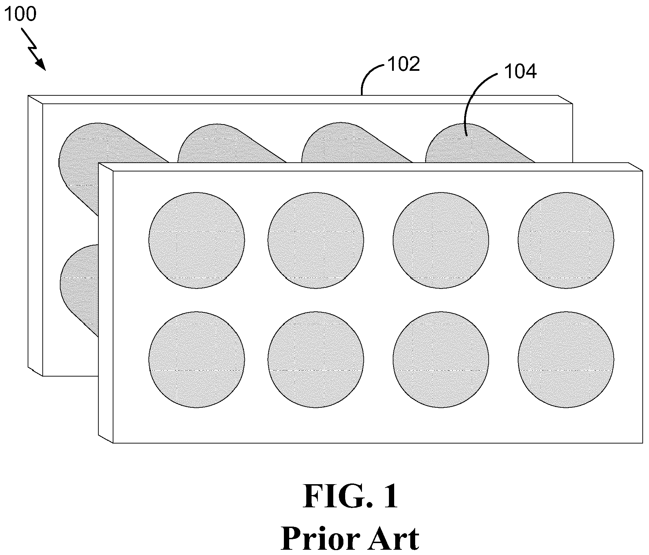

FIG. 1 is a prior art battery pack including multiple battery cells;

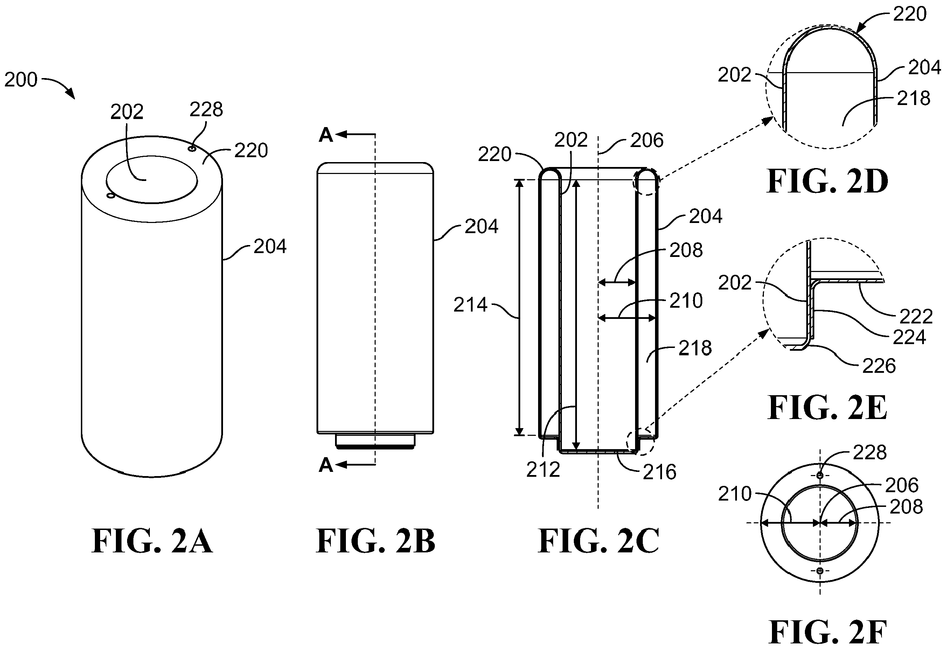

FIG. 2A is an isometric view of an example battery cell enclosure according to some embodiments, FIG. 2B is a side view of the example battery cell enclosure of FIG. 2A, FIG. 2C is a sectional view of the example battery cell enclosure taken along line A-A of FIG. 2B, FIG. 2D is a part of the sectional view of the example battery cell enclosure of FIG. 2C, FIG. 2E is a different part of the sectional view of the example battery cell enclosure of FIG. 2C, and FIG. 2F is a top view of the example battery cell enclosure of FIG. 2A;

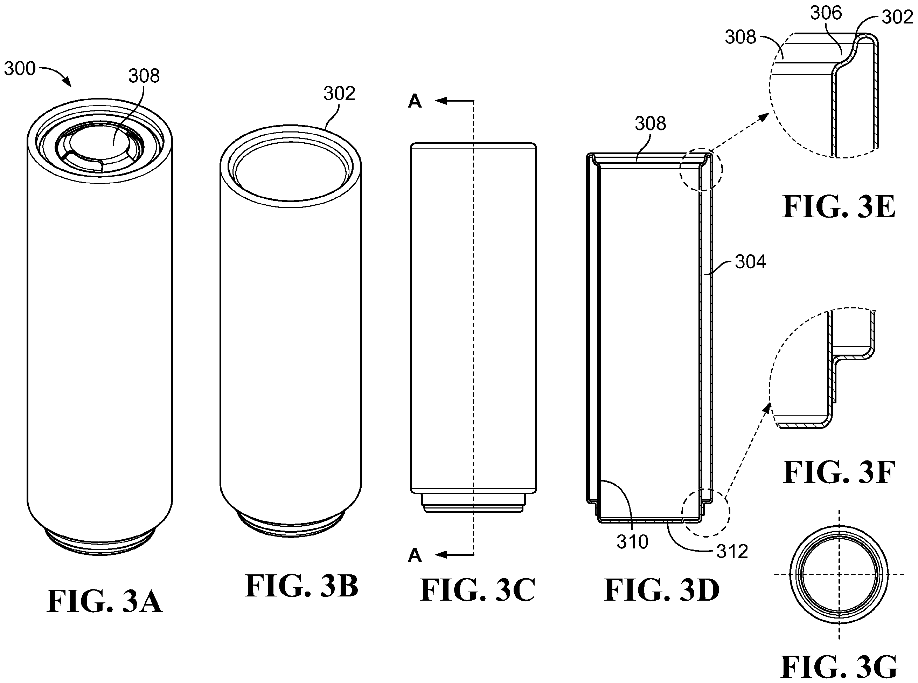

FIG. 3A is an isometric view of another example battery cell enclosure with a cap according to some embodiments, FIG. 3B is an isometric view of the example battery cell enclosure without the cap of FIG. 3A, FIG. 3C is a side view of the example battery cell enclosure of FIG. 3B, FIG. 3D is a sectional view of the example battery cell enclosure taken along line A-A of FIG. 3C, FIG. 3E is a part of the sectional view of the example battery cell enclosure of FIG. 3D, FIG. 3F is a different part of the sectional view of the example battery cell enclosure of FIG. 3D, and FIG. 3G is a top view of the example battery cell enclosure of FIG. 3B;

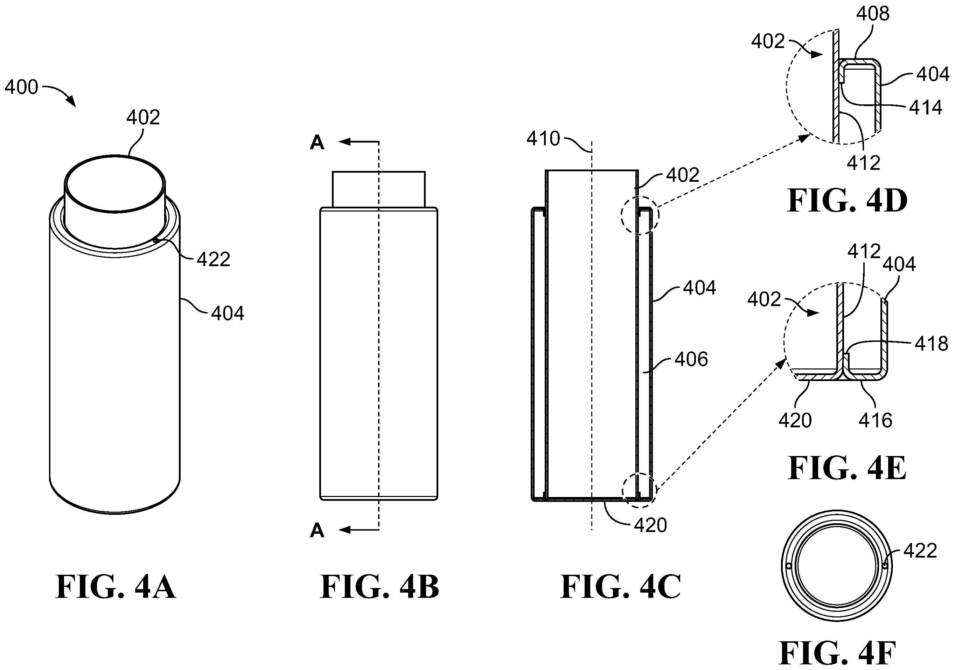

FIG. 4A is an isometric view of another example battery cell enclosure according to some embodiments, FIG. 4B is a side view of the example battery cell enclosure of FIG. 4A, FIG. 4C is a sectional view of the example battery cell enclosure taken along line A-A of FIG. 4B, FIG. 4D is a part of the sectional view of the example battery cell enclosure of FIG. 4C, FIG. 4E is a different part of the sectional view of the example battery cell enclosure of FIG. 4C, and FIG. 4F is a top view of the example battery cell enclosure of FIG. 4A;

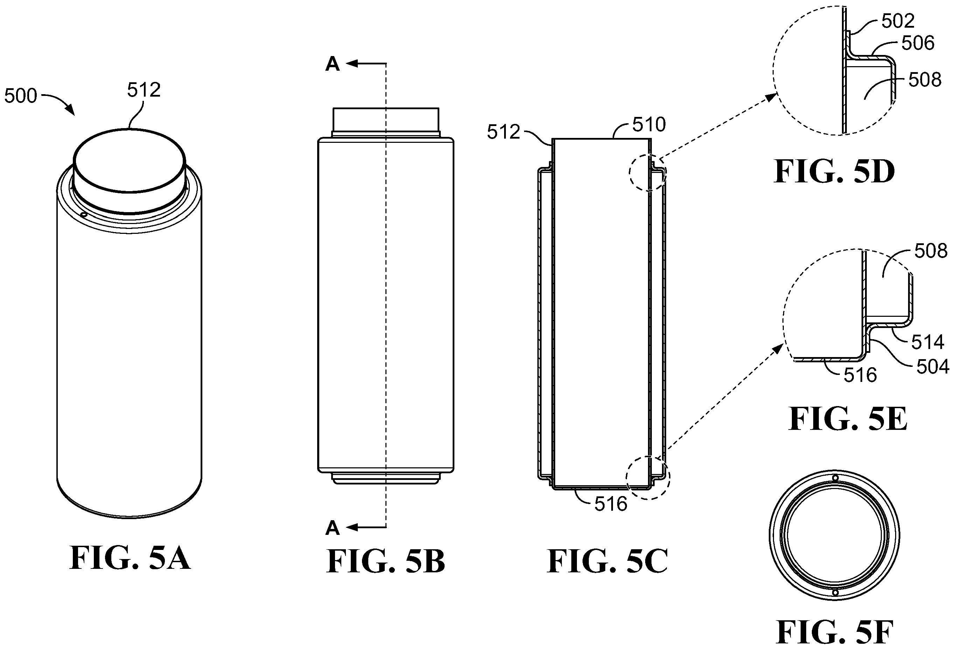

FIG. 5A is an isometric view of another example battery cell enclosure according to some embodiments, FIG. 5B is a side view of the example battery cell enclosure of FIG. 5A, FIG. 5C is a sectional view of the example battery cell enclosure taken along line A-A of FIG. 5B, FIG. 5D is a part of the sectional view of the example battery cell enclosure of FIG. 5C, FIG. 5E is a different part of the sectional view of the example battery cell enclosure of FIG. 5C, and FIG. 5F is a top view of the example battery cell enclosure of FIG. 5A;

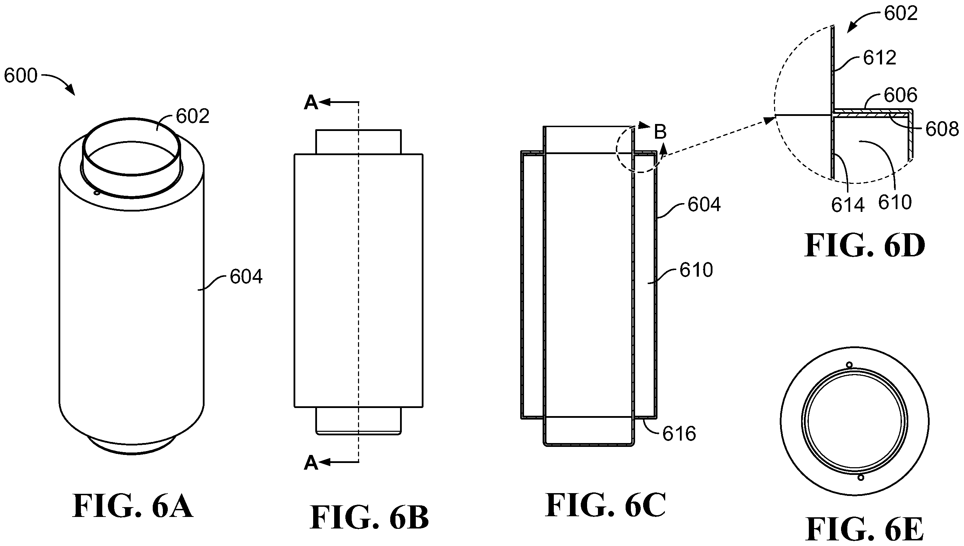

FIG. 6A is an isometric view of another example battery cell enclosure according to some embodiments, FIG. 6B is a side view of the example battery cell enclosure of FIG. 6A, FIG. 6C is a sectional view of the example battery cell enclosure taken along line A-A of FIG. 6B, FIG. 6D is a part of the sectional view of the example battery cell enclosure of FIG. 6C, and FIG. 6E is a top view of the example battery cell enclosure of FIG. 6A;

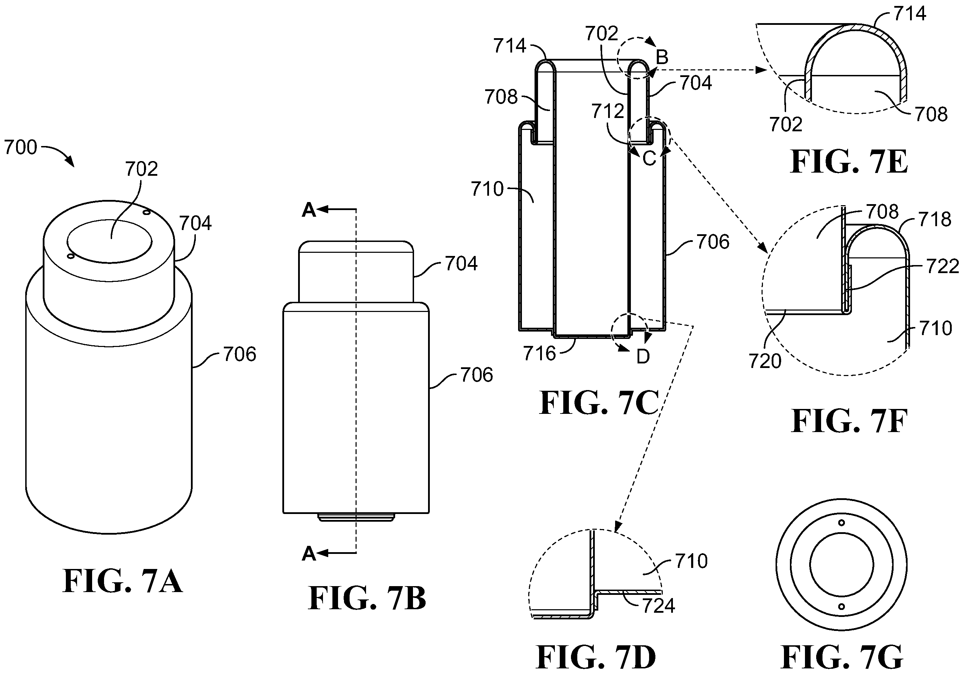

FIG. 7A is an isometric view of another example battery cell enclosure according to some embodiments, FIG. 7B is a side view of the example battery cell enclosure of FIG. 7A, FIG. 7C is a sectional view of the example battery cell enclosure taken along line A-A of FIG. 7B, FIG. 7D is a first part of the sectional view of the example battery cell enclosure of FIG. 7C, FIG. 7E is a second part of the sectional view of the example battery cell enclosure of FIG. 7C, FIG. 7F is a third part of the sectional view of the example battery cell enclosure of FIG. 7C, and FIG. 7G is a top view of the example battery cell enclosure of FIG. 7A;

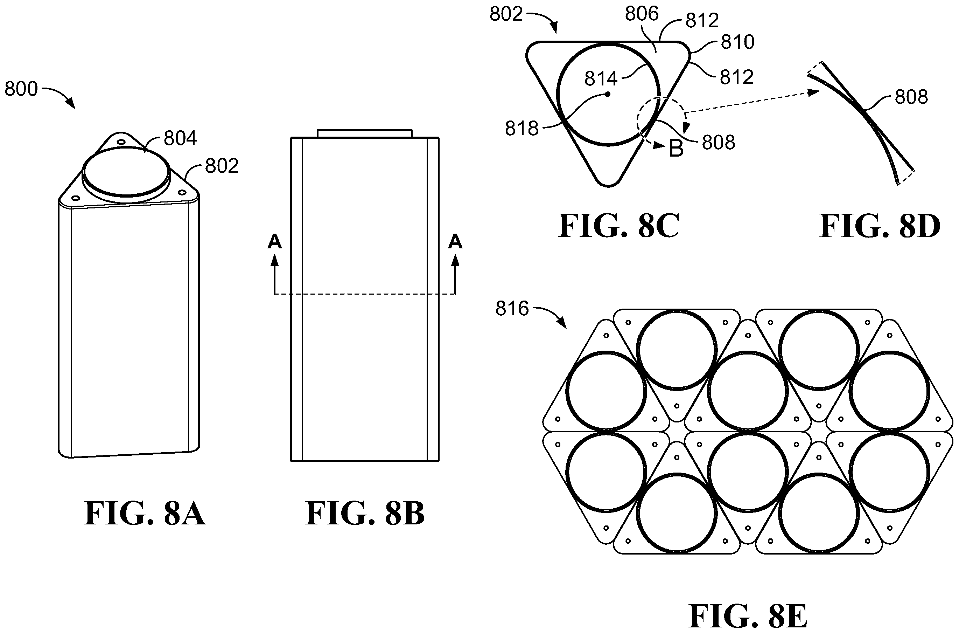

FIG. 8A is an isometric view of another example battery cell enclosure according to some embodiments, FIG. 8B is a side view of the example battery cell enclosure of FIG. 8A, FIG. 8C is a sectional view of the example battery cell enclosure taken along line A-A of FIG. 8B, FIG. 8D is a part of the sectional view of the example battery cell enclosure of FIG. 8C, and FIG. 8E is a top view of an example battery pack or a battery module using the example battery cell enclosures of FIG. 8A;

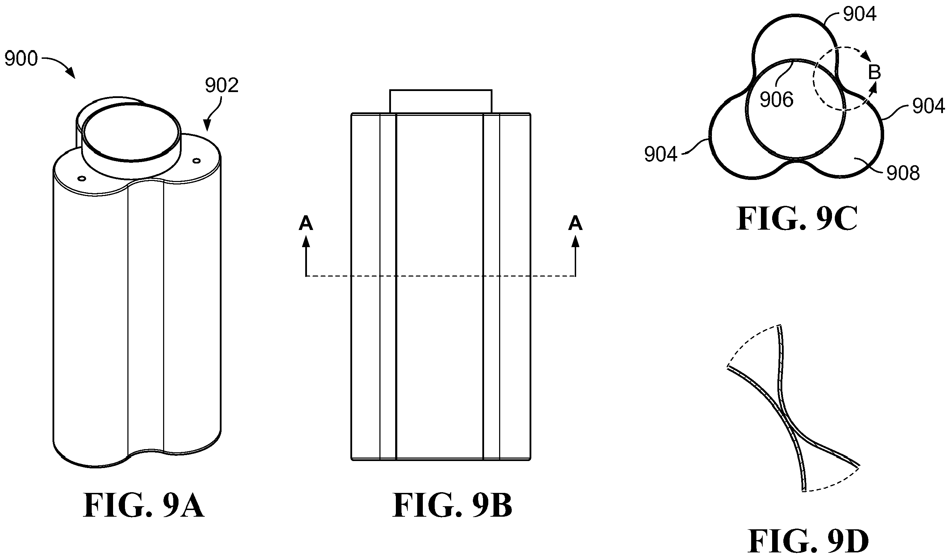

FIG. 9A is an isometric view of another example battery cell enclosure according to some embodiments, FIG. 9B is a side view of the example battery cell enclosure of FIG. 9A, FIG. 9C is a sectional view of the example battery cell enclosure taken along line A-A of FIG. 9B, and FIG. 9D is a part of the sectional view of the example battery cell enclosure of FIG. 9C; and

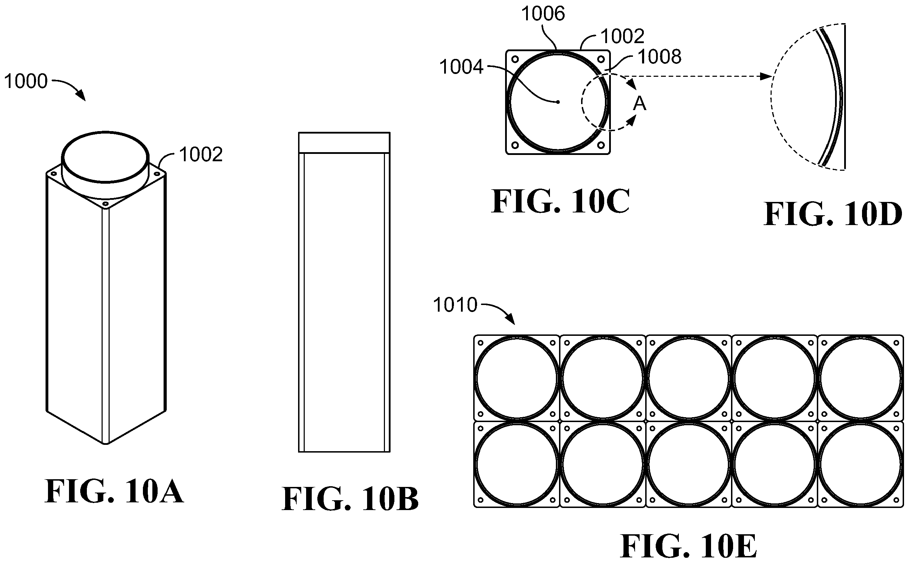

FIG. 10A is an isometric view of another example battery cell enclosure according to some embodiments, FIG. 10B is a side view of the example battery cell enclosure of FIG. 10A, FIG. 10C is a top view of the example battery cell enclosure of FIG. 10A, FIG. 10D is a part of the top view of the example battery cell enclosure of FIG. 10C, and FIG. 10E is a top view of an example battery pack or a battery module using the example battery cell enclosures of FIG. 10A.

### DETAILED DESCRIPTION OF THE DRAWINGS

Before the embodiments of the disclosure are explained in detail, it is to be understood that the disclosure is not limited in its application to the details of construction and the arrangement of the components set forth in the following description or illustrated in the drawings. The disclosure is capable of other embodiments and of being practiced or being carried out in various ways. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof. Throughout the disclosure, the terms "about" and "approximately" mean plus or minus 5% of the number that each term precedes.

Referring to FIG. 1, a prior art battery pack 100 includes two spacers 102 and multiple battery cells 104. The spacers 102 are commonly used to hold battery cells 104 and allow air to flow between the battery cells 104. Thus, the spacers 102 can be used to decrease the temperature of the battery cells 104 using cooling air. Although the spacers 102 can be used to decrease the temperatures of the battery cells 104 at a pack level, there are no current safety features to control the temperature of a battery cell 104 at a cell level.

FIGS. 2-10 illustrate different embodiments of a battery cell enclosure for thermal management of a battery cell at a cell level. For example, each battery cell enclosure associated with FIGS. 2-10 includes an inner enclosure, an outer enclosure, and a pocket between the inner enclosure and the outer enclosure. In some examples, the outer enclosure can have a cylindrical shape or any other suitable shape (e.g., prism, cube, cuboid, polyhedron, etc.). In further example, the inner enclosure can have a cylindrical shape or any other suitable shape (e.g., prism, cube, cuboid, polyhedron, etc.). In further examples, the inner enclosure can have the same shape or a different shape to the outer enclosure. The inner enclosure is configured to include a battery cell while the pocket includes a phase change material (PCM), a similar compound, fluid, or any suitable material to control the temperature of the battery cell. Cell-level thermal management has benefits over thermal management at a pack level as shown in FIG. 1. For example, the example cell enclosure with cell-level thermal management allows a battery cell with much higher operating range. In addition, the example cell enclosure reduces cost for thermal management needed at a pack level by using the minimum amount of a PCM or similar compound to control the temperature of each battery cell. Further, the example cell enclosures can be augmented by active cooling if the cell enclosures are used at a pack level. Also, the example cell enclosures can be used where space and weight are limited and active cooling of cells is not viable.

Referring to FIGS. 2A-2F, a cell enclosure 200 includes two concentric cylinders, which are an inner cylinder 202 (i.e., the inner enclosure) and an outer cylinder 204 (i.e., the outer enclosure). The inner cylinder 202 and the outer cylinder 204 share the axis 206. The inner cylinder 202 has an inner radius 208, while the outer cylinder 204 has an outer radius 210. The outer radius 210 of the outer cylinder 204 is greater than the inner radius 208 of the inner cylinder 202. The inner cylinder 202 and the outer cylinder 204 can be made of metal (e.g., carbon steel, alloy steel, stainless steel, iron, aluminum, magnesium, copper, brass, etc.). An inner height 212 of the inner cylinder 202 is a length of the inner cylinder 202 in a direction parallel to the axis 206 of the inner cylinder 202. An outer height 214 of the outer cylinder 204 is a length of the outer cylinder in a direction parallel to the axis 206 of the outer cylinder 204. In some examples, the inner height 212 is greater than the outer height 214. However, it should be appreciated that the inner height 212 can be the same as the outer height 214 or shorter than the outer height 214. In some examples, the inner cylinder 202 can include a bottom surface 216 to house a battery cell (e.g., a battery jelly roll) within the inside of the inner cylinder 202. In further examples, the inside of the inner cylinder 202 can include a battery roll, which defines the shape and the size of the inner cylinder 202. In some instances, the battery roll can include a set comprising a separator, a cathode, and an anode to be wound. It should be appreciated that the shapes of the inner and outer enclosures (i.e., the inner and outer cylinders 202, 204) are not limited to the cylindrical shape. For example, the inner and outer enclosures can include inner and outer cubes, inner and outer hexahedra, or any inner and outer polyhedral. In other examples, the inner and outer shapes may not be the same. For example, the inner and outer enclosures can include an inner cylinder and an outer cube or any suitable inner and outer shapes.

Due to the different radiuses of the two concentric cylinders, the cell enclosure 200 further includes a pocket 218 between the inner cylinder 202 and the outer cylinder 204. The pocket 218 includes a top surface 220, which covers one side between the inner cylinder 202 and the outer cylinder 204. In some examples, the top surface 220 of the pocket 218 has a half toroidal shape, which is cut substantially in half in a direction at a right angle to the axis 206 of the inner and outer cylinders 202, 204. In further examples, the top surface 220 can be made based on a reverse drawing process. Thus, the inner cylinder 202 and the outer cylinder 204 can be seamlessly connected as shown in FIG. 2D. It should be appreciated that the top surface can have any suitable shape (e.g., a flat shape or an angled shape). The pocket 218 further includes a bottom surface 222. In some examples, the bottom surface 222 is an extended surface of the outer cylinder 204 on the bottom of the pocket 218. In further examples, the pocket 218 can include an attachment surface 224 welded or otherwise attached to a surface 226 of the inner cylinder 202 to enclose the pocket 218. In further examples, the attachment surface 224 is the bottom surface 222 extended to the surface 226 of the inner cylinder 202. In even further examples, due to the difference between the inner height 212 of the inner cylinder 202 and the outer height 214 of the outer cylinder 204, the outer cylinder 204 is extended to the bottom surface 222 of the pocket 218 and is further extended to the attachment surface 224 of the pocket 218. In some examples, the bottom surface 216 of the inner cylinder 202, the inner cylinder 202, the top surface 220 of the pocket 218, the outer cylinder 204, the bottom surface 222 of the pocket 218, and the attachment surface 224 of the pocket 218 are all connected to each other and are made from one metal sheet (e.g., using a reverse drawing process). Thus, the cell enclosure 200 can be made of a single piece of metal sheet. The pocket 218 can have a substantially cylindrical annular shape and include a space surrounding the battery jelly roll included in the inner cylinder 202. In some examples, the pocket 218 can be filled with a phase change material (PCM) to control the temperature of the battery jelly roll or battery cell. It should be appreciated that the pocket 218 can be filled with any other suitable material (e.g., air, water, coolant, etc.), for controlling the temperature of the battery cell. In some examples, the pocket 218 might not include any channel (e.g., one or more holes 228) connected to the outside of the pocket 218. In further examples, the pocket 218 can close the channel (e.g., one or more holes 228) during a manufacturing process of the cell enclosure 200 (e.g., after injecting the PCM in the pocket 218).

In some examples, the cell enclosure 200 further includes one or more holes 228 on a surface (e.g., the top surface 220) of the pocket 218. The one or more holes 228 are a channel to connect the inside of the pocket 218 to the outside of the pocket 218. In some examples, through the one or more holes 228, the PCM or any other suitable material can be injected into the pocket 218. In further examples, after the PCM or any other suitable material is filled in the pocket 218 via the one or more holes 228, the one or more holes 228 can be enclosed. In some examples, the one or more holes can be in one or more of the outer cylinder 204, the top surface 220, or the bottom surface 222.

Referring to FIGS. 3A-3G, a cell enclosure 300 is similar to the cell enclosure 200 of FIG. 2 except for a top surface 302 of a pocket 304. The top surface 302 of the pocket 304 includes a step 306 to accommodate a cap 308 as shown in FIG. 3E. The cap 308 is configured to cover the top of the inner cylinder 310. In some examples, the cap 308 can have a positive battery terminal connected to a battery j elly roll in the inner cylinder 310 while a bottom surface 312 of the inner cylinder 310 can have a negative battery terminal. However, it should be appreciated that the cap 308 and the bottom surface 312 of the inner cylinder 310 can have negative and positive battery terminals, respectively. In some examples, the cell enclosure 300 can be made from a reverse-drawing process similar to the process described with respect to cell enclosure 200 of FIG. 2.

Referring to FIGS. 4A-4F, a cell enclosure 400 includes two concentric cylinders, including an inner cylinder 402 (i.e., the inner enclosure) and an outer cylinder 404 (i.e., the outer enclosure). In some examples, the inner cylinder 402 and the outer cylinder 404 are separate articles or pieces. In some examples, the outer cylinder 404 is attached (e.g., welded or otherwise joined) to the inner cylinder 402 to form a pocket 406. The inner cylinder 402 can include a battery jelly roll or a battery cell. The inner cylinder 202 and the outer cylinder 204 can be made of metal (e.g., carbon steel, alloy steel, stainless steel, iron, aluminum, magnesium, copper, brass, etc.). In some examples, the inner cylinder 202 and the outer cylinder 204 can be made of the same material or different materials. In some examples, the outer cylinder 204 may include both other and inner walls forming the cylinder 204. In other examples, the outer cylinder 204 may be formed by only an outer wall that is attached to the inner cylinder 202 such that the inner cylinder 202 forms the inner wall of the outer cylinder 204.

The cell enclosure 400 further includes a pocket 406 between the inner cylinder 402 and the outer cylinder 404. For example, the pocket 406 is formed by the inner cylinder 402 and the outer cylinder 404. In further examples, the pocket 406 is further formed by a top surface 408, which covers one side between the inner cylinder 402 and the outer cylinder 404. In some examples, the top surface 408 of the pocket 406 is substantially flat in a direction at a right angle to an axis 410 of the inner and outer cylinders 402, 404. However, it should be appreciated that the top surface 408 can have any other suitable shape (e.g., a half toroidal shape, angled, etc.). In some examples, the top surface 408 is a surface, which is extended from the outer cylinder 404. Thus, the outer cylinder 404 is bent toward the inner cylinder 402 to form the top surface 408. In further examples, the top surface 408 is attached to a surface 412 of the inner cylinder 402. For example, the top surface 408 can be bent downward to form a first attachment surface 414 as shown in FIG. 4D, e.g., a welding surface. Thus, the first attachment surface 414, the top surface 408, and the outer cylinder 404 can have a substantial reverse 'U' shape. The first attachment surface 414 is extended in the same direction as the axis 410 of the inner cylinder 402 and is welded to the surface 412 of the inner cylinder 402.

The pocket 406 is further formed by a bottom surface 416. In some examples, the bottom surface 416 is a surface extended from the outer cylinder 404 to the surface 412 of the inner cylinder 402. In some examples, the bottom surface 416 can be bent upward to generate a second attachment surface 418 as shown in FIG. 4E, e.g., a welding surface. Thus, the second attachment surface 418, the bottom surface 416, and the outer cylinder 404 can have a substantial 'U' shape. In the examples, the bottom surface 416 of the pocket 406 and a bottom surface 420 of the inner cylinder 402 can be colinear in that they may form a substantially flat surface. The second attachment surface 418 is extended in the direction parallel to the axis 410 of the inner cylinder 402 and is welded to the surface 412 of the inner cylinder 402. Thus, the pocket 406 can be formed by the outer cylinder 404, which is attached or welded to the inner cylinder 402. In some examples, the inner cylinder 402 forms a conventional battery cell, and the outer cylinder 404 is attached or welded to the conventional battery cell to create the pocket 406. In some examples, the pocket 218 can be filled with a phase change material (PCM) to control the temperature of the battery jelly roll or the battery cell included in the inner cylinder 402. It should be appreciated that the pocket 218 can be filled with any other suitable material, compound, or fluid (e.g., air, water, coolant, or any suitable material to control the temperature of the battery cell). In some examples, the pocket 218 can be an enclosed space without any channel connected to the outside of the pocket 218.

In some examples, the cell enclosure 400 further includes the one or more holes 422 on a surface (e.g., the top surface 408, the bottom surface 416, or an outer surface) of the pocket 406. The one or more holes 422 form channels to connect the inside of the pocket 406 to the outside of the pocket 406. In some examples, through the one or more holes 422, the PCM or any other suitable material can be injected into the pocket 406. In further examples, after the PCM or any other suitable material fills the pocket 406 via the one or more holes 422, the one or more holes 422 can be enclosed.

Referring to FIGS. 5A-5F, a cell enclosure 500 similar to the cell enclosure 400 of FIG. 4 is shown except for a direction of a first attachment surface 502 and a second attachment surface 504, e.g., welding surfaces. In some examples, a top surface 506 of a pocket 508 can be bent upward to form the first welding surface 502. In the examples, a top 510 of the inner cylinder 512 is disposed higher than the top surface 506 of the pocket 508 for a space to weld the first welding surface 502 to the inner cylinder 402. In some examples, a bottom surface 514 can be bent downward to form the second welding surface 504. In the examples, a bottom surface 516 of the inner cylinder 512 is disposed lower than the bottom surface 514 of the pocket 508 for a space to weld the second welding surface 504 to the inner cylinder 512.

Referring to FIGS. 6A-6E, a cell enclosure 600 similar to the cell enclosure 500 of FIG. 5 is shown, except for a joining operation between an inner cylinder 602 and an outer cylinder 604. In some examples, the inner cylinder 602 is bent to have a crimping surface 606 to be attached on a top surface 608 of a pocket formed by the inner cylinder 602 and the outer cylinder 604. In further examples, the crimping surface 606 can include first and second surfaces attached together. For example, the inner cylinder 602 can include an upper cylindrical surface 612 and a lower cylindrical surface 614 with respect to the top surface 608 of the pocket 610. The upper cylindrical surface 612 of the inner cylinder 602 is bent and extends to cover at least part of the top surface 608 of the pocket 610 to form the first surface of the crimping surface 606. The first surface is bent to be attached on the first surface and extend to the lower cylindrical surface 614 to form the second surface of the crimping surface 606. Thus, the crimping surface 606 can include two surfaces (i.e., the first and second surfaces) and is part of the inner cylinder 602. The crimping surface 606 can be disposed on and be crimped with the top surface 608 of the pocket 610. In other examples, the top surface 608 of the pocket 610 can be bent to form an inner surface of the pocket 610 and extend to a bottom surface 616 of the pocket 610. The inner surface of the pocket 610 and the inner cylinder can be crimped together such that the pocket 610 can be attached to the inner cylinder 602.

Referring to FIGS. 7A-7G, a cell enclosure 700 is a combination of embodiments of cell enclosures 200, 400, 500, and 600 of FIGS. 2, 4, 5, and 6, respectively. The cell enclosure 700 includes an inner cylinder 702, a first outer cylinder 704, and a second outer cylinder 706. The inner cylinder 702 is substantially the same as the inner cylinder 202 of FIG. 2. The inner cylinder 702 and the first outer cylinder 704 form a first pocket 708. The first pocket 708 is similar to the pocket 218 in FIG. 2. The first pocket 708 can be extended to a point 712 between a top surface 714 of the inner cylinder 702 and the bottom surface 716 of the inner cylinder 702. The inner cylinder 702 and the second outer cylinder 706 form a second pocket 710. The second pocket 710 is substantially the same as the pockets 406, 508 of FIGS. 4 and 5, respectively. In some examples, the second pocket 710 partly encloses the first pocket 708 as shown in FIG. 7F. In the examples, a top surface 718 of the second pocket 710 is bent toward the bottom surface 720 of the first pocket 708 to generate a welding surface 722, which is welded to the first outer cylinder 704. In other examples, the top surface 718 of the second pocket 710 can be attached or welded on the bottom surface 720 of the first pocket 708. In further examples, the top surface 718 of the second pocket 710 can be bent toward the top surface 714 of the inner cylinder 702 to form the welding surface 722. A bottom surface 724 of the second pocket 710 can be extended to the inner cylinder 702 and attached or welded in a way described in connection with FIGS. 4, 5, or 6. In some examples, the first pocket 708 and the second pocket 710 can be filled with the same PCM or any other suitable material. In other examples, the first pocket 708 and the second pocket 710 can be filled with different types of suitable materials.

Referring to FIGS. 8A-8E, a cell enclosure 800 is similar to any embodiment among cell enclosures 200-600 of FIGS. 2-6 except for the shape of the outer enclosure 802. The cell enclosure 800 can include the outer enclosure 802 and an inner enclosure 804. The outer enclosure in the cell enclosures 200-600 of FIGS. 2-6 is a cylindrical shape. However, the outer enclosure 802 can have a prism shape as shown in FIG. 8A. In some examples, the cell enclosure inner enclosure can have a cylindrical shape as the inner cylinder of FIGS. 2-6. The cell enclosure 800 can further include a pocket 806 between the inner enclosure 804 and the outer enclosure 802. In some examples, the distance between the inner enclosure 804 and the outer enclosure 802 may be uneven due to different shapes of the inner enclosure 804 and the outer enclosure 802 as shown in FIGS. 8C and 8D. In an example where the prism is a triangular prism, the outer enclosure 802 is joined to the inner enclosure 804 at three sections 808 along the entire length of the inner enclosure 804. In further examples, the inner enclosure 804 can touch and be attached to the outer enclosure 806 at the three sections 808 on the three corresponding surfaces of the outer enclosure 802. In further examples, the cell enclosure 800 can include three separate pockets 806. In the examples, each pocket 806 can have a substantial prism shape and be defined by one vertex 810 of the outer enclosure 806, two abutting surfaces 812 with respect to the vertex 810, and a partial surface 814 of the inner enclosure 804. In the examples, each pocket 806 of the three separate pockets 806 can include different thermal properties based on the position of the cell in the battery pack 816. However, it should be appreciated that each pocket 806 can include the same material (e.g., PCM) to control the temperature of the cell. In other examples, the cell enclosure 600 can include one connected pocket 806. For example, the inner enclosure 804 does not touch the outer enclosure 802. Thus, a space in the pocket 806 can be formed between the inner enclosure 804 and the outer enclosure such that space exists in a direction from the axis 818 of the inner enclosure 804 to the surface 812 of the outer enclosure 802 at a right angle. Thus, the spaces of the pocket 806 at the three vertices of the outer enclosure can be connected. Due to the prism shape of the outer enclosure 802, multiple cell enclosures 600 can be connected to form a battery pack 816 as shown in FIG. 8E. While a triangular prism is shown in the figures, it should be understood that any suitable prism with any suitable number of sides may be utilized.

Referring to FIGS. 9A-9D, a cell enclosure 900 similar to the cell enclosure 800 of FIG. 8 is shown, except for the shape of an outer enclosure 902. In some examples, the outer enclosure 902 can include three semicylinders 904 attached to the inner enclosure 906. Thus, the outer enclosure 902 and the inner enclosure 906 can form three separate pockets 908. It should be appreciated that the number of semicylinders 904 attached to the inner enclosure 906 is not limited to three and can be any suitable number (e.g., two, four, five, etc.). Also, the shape of semicylinders 904 can be any other suitable shape.

Referring to FIGS. 10A-10E, a cell enclosure 1000 similar to the cell enclosure 800 of FIG. 8 is shown except for the shape of an outer enclosure 1002. In some examples, the outer enclosure 1002 can have a cuboid shape. In some examples, the shape cut in a direction at a right angle to the axis 1004 of the inner enclosure 1006 can have a square shape to include a circular shape of an inner enclosure 1006. In some examples, the inner enclosure 1006 can touch and be attached to surfaces of the outer enclosures 1002. Thus, the cell enclosure 1000 can include four separate pockets 1008 formed by the outer enclosure 1002 and the inner enclosure 1006. It should be appreciated that the shape of the outer enclosure 1002 can have any other suitable shape. Due to the cuboid shape of the outer enclosure 1002, multiple cell enclosures 1000 can be connected to form a battery pack 1010 as shown in FIG. 10E.

### Further Examples Having a Variety of Features:

Example 1: A cell enclosure, comprising: A cell enclosure, comprising: an inner enclosure configured to include a battery cell; an outer enclosure; and a pocket between the inner enclosure and the outer enclosure, the pocket including a phase change material to control a temperature of the battery cell.

Example 2: The cell enclosure of Example 1, further comprising: a top surface seamlessly connecting the inner enclosure to the outer enclosure.

Example 3: The cell enclosure of Example 1 or Example 2, wherein the inner enclosure, the outer enclosure, and the top surface are a single piece of metal sheet.

Example 4: The cell enclosure of any of Examples 1 to 3, further comprising: a bottom surface being seamlessly connected to the outer enclosure.

Example 5: The cell enclosure of any of Examples 1 to 4, further comprising: a bottom attachment surface being seamlessly connected to the bottom surface, wherein the bottom attachment surface is attached to an outer surface of the inner enclosure.

Example 6: The cell enclosure of any of Examples 1 to 5, wherein a first length of the inner enclosure is longer than a second length of the outer enclosure, wherein the first length is parallel to an axis of the inner enclosure, and wherein the second length is parallel to an axis of the outer enclosure.

Example 7: The cell enclosure of any of Examples 1 to 6, wherein the inner enclosure comprises a top and a bottom, and wherein the bottom attachment surface is extended to the bottom of the inner enclosure.

Example 8: The cell enclosure of any of Examples 1 to 7, wherein the bottom attachment surface is extended to the top of the inner enclosure.

Example 9: The cell enclosure of any of Examples 1 to 8, further comprising: a top surface being seamlessly connected to the outer enclosure, wherein the cell enclosure further comprises a top attachment surface being seamlessly connected to the top surface, and wherein the top attachment surface is attached to the inner enclosure.

Example 10: The cell enclosure of any of Examples 1 to 9, wherein the inner enclosure comprises a top and a bottom, and wherein the top attachment surface is extended to the bottom of the inner enclosure or to the top of the inner enclosure.

Example 11: The cell enclosure of any of Examples 1 to 10, further comprising: a top surface being seamlessly connected to the outer enclosure; and a crimping surface being seamlessly connected to the inner enclosure, wherein the top surface is attached to the crimping surface.

Example 12: The cell enclosure of any of Examples 1 to 11, wherein the outer enclosure comprises a first outer cylinder and a second outer cylinder, wherein the pocket comprises a first pocket between the inner enclosure and the first outer cylinder and a second pocket between the inner enclosure and the second outer cylinder, and wherein the first pocket and the second pocket are physically separated pockets.

Example 13: The cell enclosure of any of Examples 1 to 12, wherein the second pocket comprises a first top surface seamlessly connected to a second outer cylinder and a second top surface, wherein a first attachment surface is seamlessly connected to the first top surface, wherein the first attachment surface is attached to the first outer cylinder, and wherein the second top surface is attached to a bottom surface of the first pocket.

Example 14: The cell enclosure of any of Examples 1 to 13, wherein the outer enclosure comprises an outer cylinder, and wherein the inner enclosure comprises an inner cylinder.

Example 15: The cell enclosure of any of Examples 1 to 14, wherein a first shape of the outer enclosure is a prism shape such that a surface of the outer enclosure is configured to contact another surface of an adjacent outer enclosure, and wherein a second shape of the inner enclosure is a cylindrical shape.

Variations and modifications of the foregoing are within the scope of the present disclosure. It is understood that the embodiments disclosed and defined herein extend to all alternative combinations of two or more of the individual features mentioned or evident from the text and/or drawings. All of these different combinations constitute various alternative aspects of the present disclosure.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein.

## Claims

1. A cell enclosure, comprising:
an inner enclosure configured to include a battery cell;
an outer enclosure; and
a pocket between the inner enclosure and the outer enclosure, the pocket including a phase change material to control a temperature of the battery cell.

2. The cell enclosure of claim 1, further comprising:
a top surface seamlessly connecting the inner enclosure to the outer enclosure.

3. The cell enclosure of claim 2, wherein the inner enclosure, the outer enclosure, and the top surface are a single piece of metal sheet.

4. The cell enclosure of claim 1, further comprising:
a bottom surface being seamlessly connected to the outer enclosure.

5. The cell enclosure of claim 4, further comprising:
a bottom attachment surface being seamlessly connected to the bottom surface,
wherein the bottom attachment surface is attached to an outer surface of the inner enclosure.

6. The cell enclosure of claim 5, wherein a first length of the inner enclosure is longer than a second length of the outer enclosure,
wherein the first length is parallel to an axis of the inner enclosure, and
wherein the second length is parallel to an axis of the outer enclosure.

7. The cell enclosure of claim 5, wherein the inner enclosure comprises a top and a bottom, and
wherein the bottom attachment surface is extended to the bottom of the inner enclosure.

8. The cell enclosure of claim 5, wherein the bottom attachment surface is extended to the top of the inner enclosure.

9. The cell enclosure of claim 1, further comprising:
a top surface being seamlessly connected to the outer enclosure,
wherein the cell enclosure further comprises a top attachment surface being seamlessly connected to the top surface, and
wherein the top attachment surface is attached to the inner enclosure.

10. The cell enclosure of claim 9, wherein the inner enclosure comprises a top and a bottom, and
wherein the top attachment surface is extended to the bottom of the inner enclosure or to the top of the inner enclosure.

11. The cell enclosure of claim 1, further comprising:
a top surface being seamlessly connected to the outer enclosure; and
a crimping surface being seamlessly connected to the inner enclosure,
wherein the top surface is attached to the crimping surface.

12. The cell enclosure of claim 1, wherein the outer enclosure comprises a first outer cylinder and a second outer cylinder,
wherein the pocket comprises a first pocket between the inner enclosure and the first outer cylinder and a second pocket between the inner enclosure and the second outer cylinder, and
wherein the first pocket and the second pocket are physically separated pockets.

13. The cell enclosure of claim 12, wherein the second pocket comprises a first top surface seamlessly connected to a second outer cylinder and a second top surface,
wherein a first attachment surface is seamlessly connected to the first top surface,
wherein the first attachment surface is attached to the first outer cylinder, and
wherein the second top surface is attached to a bottom surface of the first pocket.

14. The cell enclosure of claim 1, wherein the outer enclosure comprises an outer cylinder, and
wherein the inner enclosure comprises an inner cylinder.

15. The cell enclosure of claim 1, wherein a first shape of the outer enclosure is a prism shape such that a surface of the outer enclosure is configured to contact another surface of an adjacent outer enclosure, and
wherein a second shape of the inner enclosure is a cylindrical shape.
